(19) Europäisches Patentamt
European Patent Office
Office européen des brevets

(11) **EP 2 581 723 A2**

(12) **EUROPÄISCHE PATENTANMELDUNG**

(43) Veröffentlichungstag:
**17.04.2013 Patentblatt 2013/16**

(21) Anmeldenummer: **12179199.0**

(22) Anmeldetag: **03.08.2012**

(51) Int Cl.:
*G01M 3/24* (2006.01)     *E04B 1/00* (2006.01)
*E06B 7/00* (2006.01)     *F17D 5/06* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **30.09.2011 DE 102011115071**

(71) Anmelder: **SONOTEC Dr. zur Horst-Meyer und Münch OHG**
**06112 Halle (DE)**

(72) Erfinder:
• **Münch, Hans-Joachim**
**06130 Halle (DE)**

• **Zur Horst-Meyer, Santer**
**06120 Halle (DE)**
• **John, Ronald**
**06124 Halle (DE)**
• **Bader, Nicki**
**06120 Halle (DE)**
• **D'Achard Van Enschut, Theo**
**4835JP Breda (NL)**
• **Vallen, Jos**
**5037MB Tilburg (NL)**

(74) Vertreter: **Gulde Hengelhaupt Ziebig & Schneider Patentanwälte - Rechtsanwälte**
**Wallstraße 58/59**
**10179 Berlin (DE)**

(54) **Vorrichtung und Verfahren zur Dichtheitsprüfung von Fugen, insbesondere zwischen offenen Fensterrahmen oder Türrahmen und Mauerwerk an Gebäuden**

(57) Die Erfindung betrifft eine Vorrichtung und ein Verfahren zur Dichtheitsprüfung von Fugen mittels Ultraschall, insbesondere zwischen offenen Fensterrahmen oder Türrahmen und Mauerwerk von Gebäuden.

Sie geht von einer Vorrichtung (1) und einem Verfahren zur Messung der Schalllaufzeit von gepulstem Schall, insbesondere Ultraschall, an zu detektierenden Fugen (2) zwischen Fensterrahmen (3) und Mauerwerk (13) oder Türzargen und Mauerwerk (13) innerhalb festgelegter Zeittore I, II (14, 15) bei gleichzeitiger Bewertung von Amplituden (19, 20) des empfangenen gepulsten Schalls aus, wobei eine Aussage zur Dichtheit einer Fugendichtung (11) mit Blick auf die Amplitude (19) des empfangenen gepulsten Schalls im Zeittor I (14) vorgenommen werden kann.

Das Messverfahren ist dadurch gekennzeichnet, dass von einer Sendekapsel (4) ausgehende Ultraschallimpulse oder Ultraschallimpulspakete auf eine Fuge (2) zwischen einem Fensterrahmen (3) und Mauerwerk (13) oder zwischen einer Türzarge und Mauerwerk (13) eines offenen Fensters oder einer offenen Tür gerichtet werden und sowohl die Schalllaufzeit ihres Durchtritts durch Fehlstellen in einer Fugendichtung (11) als auch die der freien Überwindung des offenen Fensters oder einer offenen Tür von einer der Sendekapsel (4) auf gleicher oder in unterschiedlicher Höhe gegenüberliegenden Empfangskapsel (5) erfasst wird, wobei die empfangenen Ultraschallimpulse oder die Ultraschallimpulspakete anschließend einer im Gehäuse (6) integrierten Auswerteinheit zugeführt werden, die über in einem definierten Abstand zueinander festgelegten Zeittoren I, II (14, 15) den empfangenen Ultraschall qualitativ und quantitativ zu bewerten in der Lage ist und die Ausgabe der bewerteten Messergebnisse optisch und/oder akustisch durchgeführt wird.

Figur 1

**Beschreibung**

Die Erfindung betrifft eine Vorrichtung und ein Verfahren zur Dichtheitsprüfung von Fugen mittels gepulsten Ultraschalls oder Ultraschallpaketen, insbesondere zwischen offenen Fensterrahmen oder Türrahmen und Mauerwerk an Gebäuden.

Konstruktiv bedingte Lücken, die beispielsweise bei der Montage von Fenstern oder Türen in zu sanierenden Gebäuden oder in neuerstellten Rohbauten entstehen, werden in der Regel vorsorglich mit Elastomerdichtungen oder nachträglich mit aufquellenden Substanzen, wie Bauschaum, verschlossen. Bei dieser Verfahrensweise geschehen aber oft Fehler, die zu Undichtheiten führen, wobei diese auf den ersten Blick nicht erkannt werden. Die Undichtheiten sind bauphysikalisch unerwünscht und schädlich, denn sie sind der Ausgangspunkt sich ausbildender Wärme-/Kältebrücken, die die Energieeffizienz/Energiebilanz eines Gebäudes verschlechtern, seinen Wert erheblich mindern können und auch Folgeschäden, wie etwa eine gesundheitsgefährdende Bildung von Schwarzschimmel durch das Eindringen von Feuchtigkeit bei gleichzeitiger unzureichender Lüftung, hervorrufen.

Bei der Errichtung von Neubauten muss seit einigen Jahren mit einem Energiepass nachgewiesen sein, dass ein Gebäude den gesetzlich festgelegten Normen zur Wärmedämmung und zur Nutzung regenerativer Energie, in einem bestimmten Prozentsatz, entspricht bzw. ausgelegt ist. Diese Forderungen werden sich künftig noch weiter verschärfen und es wird damit eine qualitativ fachgerechte Bauausführung immer wichtiger.

Neben thermografischen Untersuchungen von Gebäudefassaden, die deren Wärmedämmung visuell farblich abgestuft darstellen, wird zunehmend der Fokus auf ein Untersuchen mittels Ultraschall gerichtet, und zwar schon während der Bauphase. Damit werden der Aufwand an Zeit und Geld für spätere Nachbesserungen an fertig gestellten Gebäuden vermieden.

Bekannt ist beispielsweise die zerstörungsfreie Prüfung von Bauteilen mittels Ultraschall. Sie basiert darauf, dass Ultraschall in das Bauteil eingekoppelt wird und an Fehlstellen oder an der Rückwand reflektiert wird. Diese Signale werden ausgewertet. Die Übernahme dieses Verfahrens für den erfinderischen Zweck gelingt indes nicht, da bei Vorliegen eines ausgehärteten Bauschaums der Ultraschall diesen nicht durchdringen kann. Außerdem sind die Ultraschallsignale stark von der Beschaffenheit des zu durchschallenden Materials und seiner Dicke abhängig. Ein solches Verfahren ist daher für eine schnell und mobil durchführbare Prüfung nicht geeignet.

Nachfolgend soll auf einige den Stand der Technik belegende Lösungen beispielhaft eingegangen werden.

Zur Überprüfung von geschlossenen Räumen, wie z.B. von Tanks, Laderäumen von Schiffen, KFZ-Karosserien oder von Räumen in Gebäuden auf Dichtheit gegenüber der Außenwelt, gegen Wärme-, Flüssigkeits- oder Gasverlust ist es erforderlich, Schwachstellen an Türen, Fenstern, Luken oder Gebäudeschäden ohne größeren Aufwand aufzudecken. Das kann beispielsweise mit einem mehrteiligen Ultraschall-Kugeltransmitter gemäß der Beschreibung in DE 20 2011 001 757 U1 geschehen. Der Ultraschall-Kugeltransmitter sendet über Sendekapseln, die sich an seiner Oberfläche befinden, Signale aus, wobei letztere außerhalb eines geschlossenen Raumes durch separate Empfänger in gedämpfter oder verstärkter Intensität aufgenommen und nachfolgend anhand eines Referenzsignals bewertet werden. Der Kugeltransmitter hängt dabei frei im Prüfraum oder er liegt als Halbkugel auf einer Fläche des Prüfraums. Eine besondere Ausrichtung des Ultraschalls auf eine definiert begrenzte Prüffläche eines Bauteils auf Dichtheit ist hiermit nicht möglich.

Mit DE 42 08 294 C2 wird ein Verfahren zur Ultraschall-Detektion vorgeschlagen, wobei es zur Positionserfassung eines Gegenstandes, hier einer Bandkante einer Materialbahn, verwendet wird. Dabei wird ein Senderwandler mit einer Impulsfolge angesteuert, deren Frequenz außerhalb der Eigenfrequenz des Empfangswandlers liegt und wobei der Empfangswandler das erfasste Schwebungssignal einer Auswertung zuführt. In einer besonderen Ausführung des Verfahrens wird der Spitzenwert der ersten empfangenen Schwebung ausgewertet. Mit dieser Lösung soll der Empfang der Ultraschallwellen in vereinfachter Weise erfolgen.

Eine ähnliche Lösung wird in DE 195 00 822 C1 mit einem Ultraschall-Kantenfühler zur Erfassung der Bahnkante einer Warenbahn vorgeschlagen. Der Kantenfühler besitzt mehrere Ultraschallsensoren, denen je ein eigenes, von den Ultraschallwellenimpulsen im Messspalt durchlaufenes Sensormessfeld zugeordnet ist. Durch eine Schalteinrichtung wird jeweils nur einer der Sensoren eingeschaltet und automatisch zwischen den Sensoren umgeschaltet, wenn sich die Warenbahnkante aus dem Messfeld eines der Sensoren in das Messfeld des jeweils benachbarten anderen Sensors verlagert. Ein Prozessor nutzt das Empfangssignal des eingeschalteten Sensors zur Berechnung der optimalen Kantenlage der Warenbahn anhand eines bekannten Eichwertes, wodurch eine Bahnführungseinrichtung gesteuert wird.

Die vorgenannten Lösungen nutzen Ultraschall aussendende und wieder aufnehmende Mittel, unter Weiterleitung der Signale zu einer nachgeordneten Auswertung, um z.B. Undichtheiten von geschlossenen Räumen, Tanks, Laderäumen etc. festzustellen oder den Lauf einer fortlaufend zu produzierenden/zu verarbeitenden Warenbahn in einem Produktionsprozess optimal einzustellen. Dafür wird Ultraschall permanent ausgesandt und das Ergebnis des Empfangs detektiert. Abweichungen von einem Referenzwert stellen Fehlerquellen am Messobjekt dar, die dann qualitativ und quantitativ zu bewerten sind.

Eine bloße Übertragung einer derartigen Verfahrensweise zur Lösung der erfindungsgemäßen Zielstellung, nämlich Fugen zwischen Mauerwerk und montierten Fensterrahmen oder Türzargen auf Dichtheit zu prüfen, ohne dass der umbaute Raum komplett geschlossen sein muss, lässt sich hier nicht vornehmen, denn der ausgesandte Ultraschall würde ohne große Abschwächung seiner Intensität durch die offenen Fensterhöhlen oder Türöffnungen übertragen werden, was so gut wie keine Rückschlüsse auf die Dichtheit von Fensterrahmen oder Türzargen zulässt.

Daher ist es Aufgabe der Erfindung eine Lösung vorzuschlagen, mit deren Hilfe eine Vorrichtung mit fest oder flexibel zueinander positionierten Sensoren, die Ultraschall aussenden oder empfangen, die Nahtstelle oder Fuge zwischen zwei Elementen eines ansonsten umbauten, aber in der Bauphase offenen Raumes eines Baukörpers detektiert und ein Verfahren der Ultraschallaussendung zur Laufzeitmessung mit gepulstem Schall oder Ultraschallpaketen innerhalb mindestens zweier sogenannter Zeittore herangezogen wird, wobei bei variabel zueinander einstellbaren Sensoren eine Selbstkalibrierung der Vorrichtung möglich sein soll und über die Messung der Amplitude des Ultraschalls eine Aussage zur Qualität der Dichtheit einer Nahtstelle oder einer Fuge von zwei aneinander grenzenden Elementen in einem Baukörper getroffen werden kann.

Damit soll es möglich werden, gemäß kontinuierlich fortschreitendem Bauablauf an einem Gebäude Mängel in der Abdichtung insbesondere an Fenstern oder Türen und angrenzendem Mauerwerk zu erkennen und diese Mängel mit geringem Aufwand zu beseitigen und diese nicht erst nach Fertigstellung eines Gebäudes zu diagnostizieren und mit unvergleichlich höherem Kostenaufwand abzustellen.

Die Aufgabe der Erfindung wird wie folgt gelöst, wobei hinsichtlich der grundlegenden erfinderischen Gedanken auf die Patentansprüche 1 und 5 verwiesen wird. Die weitere Ausgestaltung der Erfindung ist in den Patentansprüchen 2 bis 4 und 6 bis 10 dargelegt.

Zur Darlegung der Erfindung sind weitere Hinweise erforderlich.

Die Erfindung geht davon aus, dass eine Vorrichtung zur Dichtheitsprüfung von Fugen, insbesondere zwischen einem offenen Fensterrahmen oder einer Türzarge einer offenen Tür und Mauerwerk an einem Gebäude, bestehend aus einer Zusammenführung einer Sende- und Empfangseinheit für gepulste Ultraschallsignale oder Ultraschallimpulspakete über ein Gehäuse mit integrierter Auswertung und einer Ausgabe von Messergebnissen, vorliegt, wobei sich die Sende- und Empfangseinheit in oder an dem Gehäuse befindet und zumindest aus je einer Sende- und einer Empfangskapsel besteht, wobei diese in definiert festem Abstand zueinander achsenparallel distanziert oder in einem definierten Wirkungsbereich flexibel zueinander achsenparallel auf Ebenen gleicher oder in unterschiedlicher Höhe horizontal ausrichtbar und dafür ausgelegt sind, die in einer Fuge aneinandergrenzenden Kanten von in einem Baukörper eines Gebäudes eingesetzten Elementes und von Mauerwerk des Baukörpers zu detektieren und, dass mindestens ein Ausgabemittel zur Darstellung von bewerteten Messergebnissen am Gehäuse der Vorrichtung angebracht ist.

Mit einer derartigen Anordnung einer Sende- und einer Empfangskapsel am Gehäuse der Vorrichtung kann vorteilhafterweise ein mobiles Handgerät geschaffen werden, welches entweder für fest distanzierte Messbereiche oder für in definierten Grenzen vergrößerbare oder verkleinerbare Messbereiche genutzt werden kann. Durch die definiert flexibel anpassbare Ausrichtung der prinzipiell zueinander weisenden Wirkflächen von Sende- und Empfangskapsel können auch Fugen untersucht werden, deren Ein- und Austrittsbereiche für Ultraschall auf unterschiedlicher Höhe liegen. Das ist besonders im Bauwesen bei einzusetzenden Fensterrahmen und Türzargen häufig anzutreffen.

In einer Ausgestaltung der Erfindung sind daher die Sende- und die Empfangskapsel bei ihrer zueinander achsenparallelen oder auf unterschiedlicher Höhe vorgenommenen flexiblen Ausrichtung am Ende jeweils eines ein Sende- und ein Empfangskabel umhüllenden biegsamen Schlauches oder Rohres befestigt.

Der biegsame Schlauch oder das biegsame Rohr besitzen dabei eine solche Länge, die es erlaubt, das mobile Handgerät möglichst sicher in der Nähe einer Fuge oder eines Spaltes mit tolerierbaren Abstandsabweichungen zu führen.

Die Vorrichtung ist als mobiles Handgerät in seiner Kompaktheit weiter so ausgelegt, dass als Ausgabemittel von in-real-time ermittelten Bewertungsergebnissen ein Farbdisplay und/oder eine im hörbaren Bereich vornehmbare Sprach- oder Geräuschausgabe über einen Kopfhörer oder über einen im Gehäuse integrierten Lautsprecher vorhanden sind.

Damit ist es einem Untersuchenden mit mindestens doppelter Sicherheit möglich, augenblicklich Fehlstellen zu orten und für die Arbeiten im Rahmen einer Nachbesserung zu markieren.

Die Arbeit mit der Vorrichtung als mobilem Handgerät macht es unter Baustellenbedingungen erforderlich, dass es als ein mit einer autarken Spannungsversorgung betriebenes Gerät konzipiert ist.

Mit der Vorrichtung kann ein Verfahren zur Dichtheitsprüfung von Fugen realisiert werden, wobei von einer Sendekapsel ausgehende Ultraschallimpulse oder Ultraschallimpulspakete auf eine Fuge zwischen einem Fensterrahmen und Mauerwerk oder zwischen einer Türzarge und Mauerwerk eines offenen Fensters oder einer offenen Tür gerichtet werden und sowohl die Schalllaufzeit ihres Durchtritts durch Fehlstellen in einer Fugendichtung als auch die der freien Überwindung des offenen Fensters oder einer offenen Tür von einer der Sendekapsel auf gleicher oder in unterschiedlicher Höhe gegenüberliegenden Empfangskapsel erfasst wird, wobei die empfangenen Ultraschallimpulse oder die Ultraschallimpulspakete anschließend einer im Gehäuse integrierten Auswerteeinheit zugeführt werden, die über in einem definierten Abstand zueinander festgelegten Zeittoren I, II den empfangenen Ultraschall qualitativ und quantitativ zu bewerten in der Lage ist und die Ausgabe der bewerteten Messergebnisse optisch und/oder akustisch durchgeführt wird.

Das Verfahren bedient sich bewusst der Aussendung und des Empfangs gepulsten Schalls oder von Ultraschallimpulspaketen bei Messung der Schalllaufzeit im Gegensatz zu bekannten Verfahren mit permanenter Schallaussendung und Messung einer Schallabschwächung beim Auftreffen auf Hindernisse, denn es kann auf diese Weise verhindert werden, dass der Messeffekt durch den Anteil Ultraschall, der durch offene Fenster- oder Türhöhlungen austritt, insbesondere durch dessen größerer Amplitude, verfälscht wird.

In einer verfahrensgemäßen Ausgestaltung der Erfindung wird vorgesehen, dass zur Bewertung empfangenen, gepulsten Ultraschalls oder von Ultraschallimpulspaketen die Auswerteeinheit mit zumindest zwei zeitlich zueinander versetzten Zeittoren I, II arbeitet, die entweder bei fest zueinander beabstandeter Sende- und Empfangskapsel unveränderbar in ihrer Dimension eingestellt oder bei variabel zueinander positionierbarer Sende- und Empfangskapsel im Wege einer Selbstkalibrierung dimensioniert und lagebestimmt werden.
Damit kann erreicht werden, dass bereits werksseitig eine fest eingestellte Kalibrierung erfolgt oder entsprechend der in unterschiedlicher Höhe ausrichtbaren Sende- und Empfangskapsel vor der eigentlichen Messung eine automatisch auslösbare Selbstkalibrierung vorgenommen wird, damit objektiv die Zeittore I, II den vorliegenden Messbedingungen in Bezug auf eine zu erwartende Schalllaufzeit angepasst sind.

Das Verfahren ermöglicht vorteilhafterweise, dass über die Messung der Amplitude empfangenen, gepulsten Ultraschalls oder von Ultraschallimpulspaketen in einem ersten Zeittor I eine Aussage zur Qualität der Dichtung einer Fuge zwischen einem Fensterrahmen an einem offenen Fenster und Mauerwerk oder an einer Türzarge einer offenen Tür und Mauerwerk an einem Gebäude getroffen wird. Das bedeutet, dass je kleiner die gemessene Amplitude ist, von einer dichten Fuge ausgegangen werden kann, da der Ultraschall mehr Zeit benötigt, um in ein zeitlich "weiter entferntes" Zeittor II zu gelangen und registriert zu werden.
Im Falle der Registrierung in dem zeitlich "näher" definierten Zeittor I wird erfindungsgemäß davon ausgegangen, dass die Fuge Fehlstellen aufweist und einer Nachbesserung bedarf.
Das zeitlich "entferntere" zweite Zeittor II hat darüber hinaus die Aufgabe, eine permanente Funktionskontrolle einer Messung vorzunehmen.
Zur weiteren verbesserten Anpassung an örtliche Bedingungen eines Messortes wird vorgesehen, dass die Sende- und Empfangsleistung von Sende- und Empfangskapsel sowohl fest als auch variabel eingestellt und ihre Richtcharakteristik durch ein Richtrohr verstärkt wird.
Die Vermittlung eines optimalen Eindrucks zur Qualität einer Fugendichtung wird durchgeführt, indem mehrere farblich abgestufte Leuchtdioden oder ein in einem Farbdisplay sich kontinuierlich aufbauender oder abschwächender Graph verwendet werden.
Die Erfindung soll nachfolgend anhand eines Ausführungsbeispiels näher erläutert werden. Dabei wird auf die Figuren 1 bis 6 zurückgegriffen.
Es zeigen:

Figur 1 eine erfindungsgemäße Vorrichtung mit auf biegsamem Schlauch angeordneter Sende- und Empfangskapsel,

Figur 2 Schalldetektion an undurchlässiger Fugendichtung,

Figur 3 schematische Darstellung des Ergebnisses der Schalldetektion bezüglich Figur 2,

Figur 4 Schalldetektion an durchlässiger Fuge,

Figur 5 schematische Darstellung des Ergebnisses der Schalldetektion bezüglich Figur 4, und

Figur 6 Darstellung des mathematisch-physikalischen Zusammenhangs zur Messung des direkten Schallweges bei defekter Fuge.

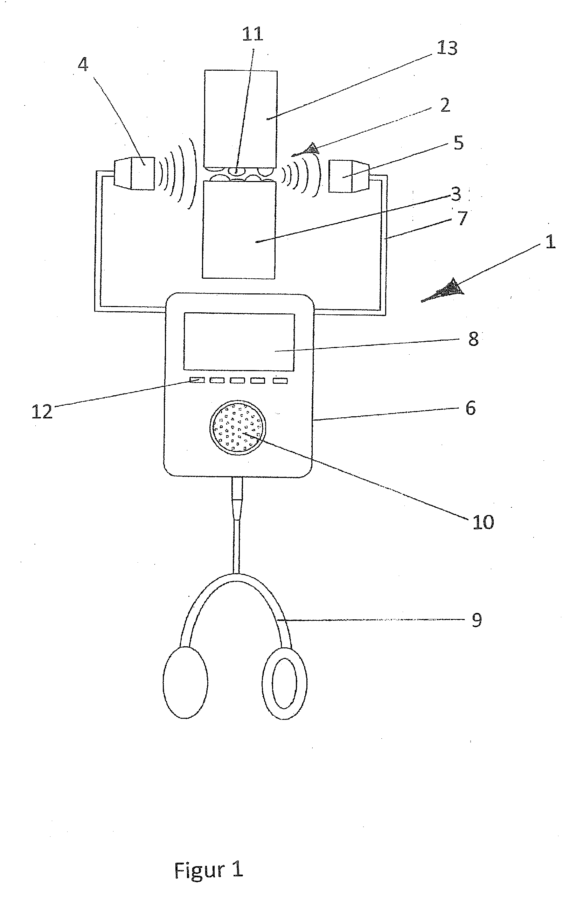

Nach Figur 1 ist der prinzipielle äußere Aufbau der erfindungsgemäßen Vorrichtung 1 zur Dichtheitsprüfung mit Anordnung einer Sende- und einer Empfangskapsel 4, 5 am Ende eines von einem Gehäuse 6 der Vorrichtung 1 ausgehenden biegsamen Schlauchs 7 gezeigt. Die Sende- und Empfangskapsel 4, 5 befinden sich in diesem Beispiel gegenüberliegend auf gleicher Höhe. Das Gehäuse 6 weist ein Farbdisplay 8 und Leuchtdioden 12 zur optischen Visualisierung der empfangenen und ausgewerteten Ultraschallsignale oder Ultraschallimpulspakete sowie zusätzlich auch Mittel zur akustischen Wahrnehmung in Form eines Kopfhörers 9 und eines Lautsprechers 10 auf. Die optische Visualisierung und die akustische Wahrnehmung werden im Vergleich zu einem gespeicherten Referenzwert für eine undurchlässige Fugendichtung 11 bei den örtlichen Verhältnissen angepassten Abständen von Sende- und Empfangskapsel 4, 5 vorgenommen bzw. abgeglichen. Die Vorrichtung 1 kann sich den örtlichen Verhältnissen hinsichtlich eines wechselnden Abstandes a der Schallwandler (Sende- und Empfangskapsel 4, 5) zueinander durch Selbstkalibrierung anpassen.

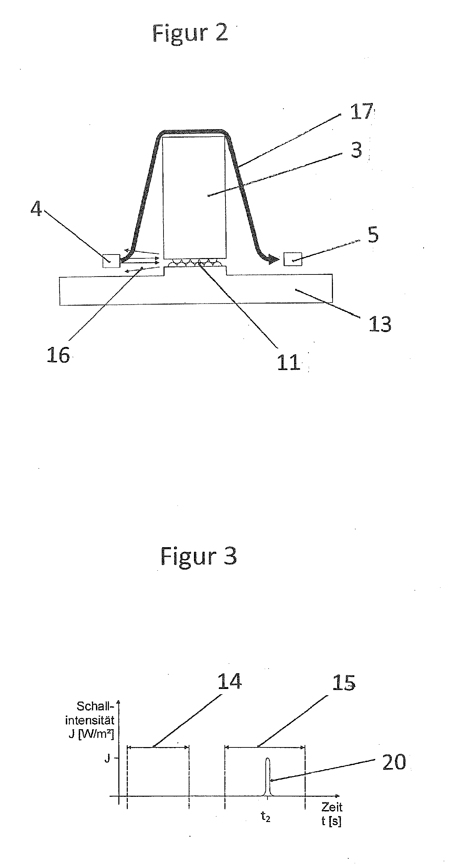

Figur 2 stellt den Verlauf ausgesendeten Ultraschalls oder von Ultraschallimpulspaketen um einen Fensterrahmen 3, der über eine Fugendichtung 11 im Mauerwerk 13 eingefügt ist, dar. Hierbei ist zu erkennen, dass Teile des ausgesandten Ultraschalls oder von Ultraschallimpulspaketen reflektiert werden, Schallreflexion 16, und der überwiegende Anteil ausgesandten Ultraschalls oder von Ultraschallimpulspaketen einen verlängerten indirekten Schallweg 17 um den schalldicht eingesetzten Fensterrahmen 3 nimmt.

Diese Situation einer schalldicht ausgeführten Fugendichtung 11 ist in Figur 3 in einem Diagramm Schallintensität J über die Zeit t dargestellt, wobei zwei sogenannte Zeittore I, II [14, 15] festgelegt sind, innerhalb derer ein Schallempfang erwartet werden kann. Im zeitlich später auf der Zeitachse definierten Zeittor II [15] kann in dem Beispiel, das die undurchlässige Fugendichtung 11 nach Figur 2 symbolisiert, tatsächlich der Hauptteil ausgesandten Ultraschalls oder von Ultraschallimpulspaketen, abzüglich der Schallreflexionen 16, erwartet werden.

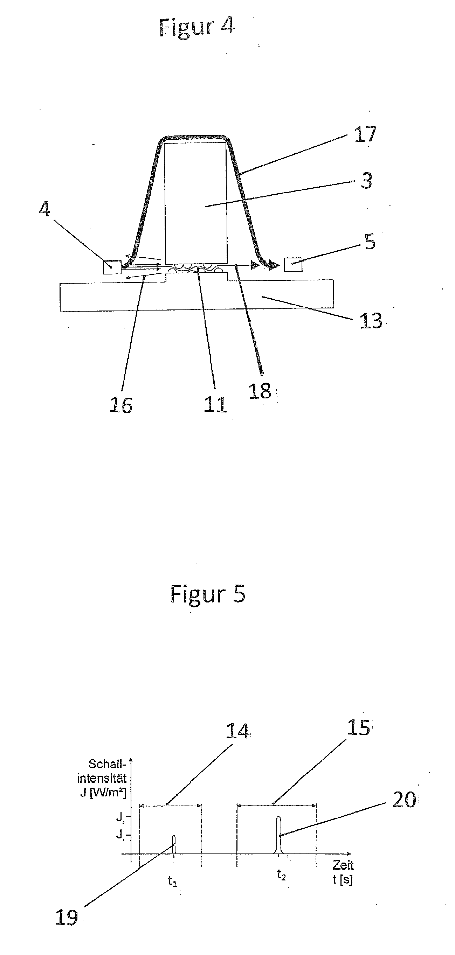

Ist die Fuge 2 in der Fugendichtung 11 gemäß Figur 4 nur unzureichend abgedichtet, wird sie zumindest teilweise vom Ultraschall oder von Ultraschallimpulspaketen durchdrungen, der/die einen direkten Schallweg 18 nimmt/nehmen.

Damit wird zwar noch im Zeittor II [15] zum Zeitpunkt $t_2$ der Ausschlag einer Amplitude 20 registriert, die aus der Intensität des Ultraschalls oder der Ultraschallimpulspakete resultiert, der/die den indirekten Schallweg 17 um den Fensterrahmen 3 herum genommen hat/haben, aber es ist eben aufgrund des direkten Schallweges 18, den Teile des Ultraschalls/der Ultraschallimpulspakete durch die defekte Fugendichtung 11 nehmen, auch eine Amplitude 19 zum Zeitpunkt $t_1$ im Zeittor I [14] festzustellen. Der Ausschlag der Amplitude 19 kann dabei zur Bewertung der Größe der Durchlässigkeit in der Fugendichtung 11 herangezogen werden. Es sei an dieser Stelle festgehalten, dass Ultraschall in dieser Messanordnung des "offenen" Raumes im Zeittor II [15] immer empfangen wird. Damit kann vorteilhafterweise stets eine permanente Funktionskontrolle der messenden und für den vorliegenden Anwendungsfall einkalibrierten Vorrichtung 1 durchgeführt werden.

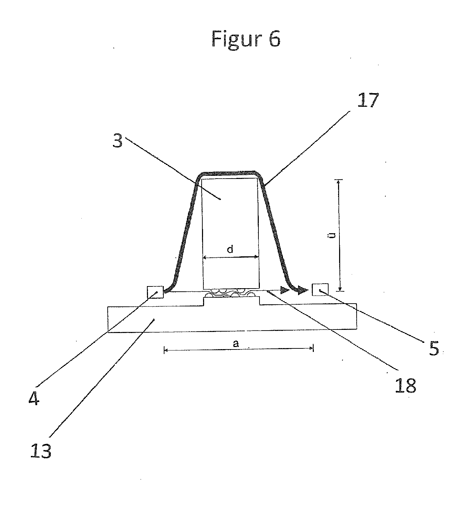

Abschließend soll auf die Darstellung gemäß Figur 6, der Festlegung der Zeittore I, II [14, 15] und der Bewertung der Amplitude 19 im Zeittor I [14] näher eingegangen werden.

Der direkte Schallweg 18 kann mit $s_d \cong a$ abgeschätzt werden, dem steht der indirekte Schallweg 17

mit $\quad s_i \cong d + 2\sqrt{\ddot{u}^2 + \frac{1}{4}(a-d)^2}$ gegenüber (a: Abstand der Sende- und Empfangskapsel 4, 5; d: Dicke des Fensterrahmens 3; ü: Überdeckung der Sende- und Empfangskapsel 4, 5 durch den Fensterrahmen 3).

Die Schalllaufzeiten können daraus mit

$t = \dfrac{s}{v}$ ermittelt werden. Proportionalitätsfak-tor ist der Kehrwert der Schallgeschwindigkeit in Luft. Sie beträgt ca. 333 m/s und schwankt ca. 12 m/s bei einer Temperaturänderung von 20 K, also ca. 4%. Eine Temperaturschwankung von ±20 K ist für die Anwendung in einem mobilen Handgerät angemessen.

Für die Gewährleistung der Aussagesicherheit müssen die Zeittore I, II [14, 15] mit einem Abstand zueinander dimensioniert sein.

Ausgehend von der Schalllaufzeit $t_1$ des direkten Weges $s_d$ haben sich als geeignet erwiesen:

- Zeittor I [14] symmetrisch ±2% um $t_1$ (d.h. Start: 0,96 * $t_1$, Ende: 1,04 * $t_1$)
- Zeittor II [15] mit einem Sicherheitsabstand von 20% zu $t_1$ und einer Breite von 50% (d.h. Start: 1,2 * $t_1$, Ende: 1,5 * $t_1$)

Durch die Verwendung von Ultraschallimpulspaketen sind Aussendung und Empfang der einzelnen Pakete fest determiniert.

Werden die Sendekapsel 4 und die Empfangskapsel 5 mechanisch fest montiert, sind die Schallwege (und mit der Schallgeschwindigkeit verknüpft auch die Schalllaufzeiten) bekannt und die Zeittore I, II [14, 15] können ab Werk dimensioniert werden.

Sind die Sende- und die Empfangskapsel 4, 5 dagegen auf biegsamen Schläuchen 7 angeordnet, sind die Schalllaufzeiten nicht vorhersagbar, muss die Vorrichtung 1 die Verhältnisse selbst ausmessen. Dazu wird die Vorrichtung 1 in den freien Raum gehalten und eine Selbstkalibrierung per Knopfdruck gestartet (selbstlernendes System).

Ergänzend ist eine Messung der Amplitude 19 möglich, denn die Amplitude 19 im Zeittor I [14] repräsentiert die Qualität der Fugendichtung 11.

Da die Amplitude 19, 20 von der Schalldämpfung der Luft, der Empfindlichkeit der Schallwandler usw. abhängt, muss vor der Messung die Empfindlichkeit des Systems ohne Schallhindernis ermittelt und dieser Wert als 100%-Referenz gespeichert werden. Dies kann im Rahmen der Selbstkalibrierung mit erfolgen.

Bezugszeichenliste

| | |
|---|---|
| 1 | Vorrichtung zur Dichtheitsprüfung |
| 2 | Fuge |
| 3 | Fensterrahmen |
| 4 | Sendekapsel |
| 5 | Empfangskapsel |
| 6 | Gehäuse |
| 7 | Schlauch, biegsam |
| 8 | Farbdisplay |
| 9 | Kopfhörer |
| 10 | Lautsprecher |
| 11 | Fugendichtung |
| 12 | Leuchtdioden |
| 13 | Mauerwerk |
| 14 | Zeittor |

15 Zeittor II
16 Schallreflexion
17 indirekter Schallweg
18 direkter Schallweg
19 Amplitude
20 Amplitude

a Abstand der Schallwandler
d Dicke Fensterrahmen oder Zarge
ü Überdeckung der Sendekapsel durch Fensterrahmen oder Zarge
J Schallintensität
t Zeit

**Patentansprüche**

1. Vorrichtung (1) zur Dichtheitsprüfung von Fugen (2), insbesondere zwischen einem offenen Fensterrahmen (3) oder einer Türzarge einer offenen Tür und Mauerwerk (13) an einem Gebäude, bestehend aus einer Zusammenführung einer Sende- und einer Empfangseinheit für gepulste Ultraschallsignale oder Ultraschallimpulspakete über ein Gehäuse (6) mit integrierter Auswertung und einer Ausgabe von Messergebnissen, **gekennzeichnet dadurch, dass** sich die Sende- und Empfangseinheit in oder an dem Gehäuse (6) befindet und zumindest aus je einer Sende- und einer Empfangskapsel (4, 5) besteht, wobei diese in definiert festem Abstand zueinander achsenparallel distanziert oder in einem definierten Wirkungsbereich flexibel zueinander achsenparallel auf Ebenen gleicher oder in unterschiedlicher Höhe horizontal ausrichtbar und dafür ausgelegt sind, die in einer Fuge (2) aneinandergrenzenden Kanten von in einem Baukörper eines Gebäudes eingesetzten Elementes und von Mauerwerk (13) des Baukörpers zu detektieren und, dass mindestens ein Ausgabemittel zur Darstellung von bewerteten Messergebnissen am Gehäuse (6) der Vorrichtung (1) angebracht ist.

2. Vorrichtung (1) zur Dichtungsprüfung von Fugen nach Anspruch 1, **gekennzeichnet dadurch, dass** die Sende- und die Empfangskapsel (4, 5) bei ihrer zueinander achsenparallelen oder auf unterschiedlicher Höhe vorgenommenen flexiblen Ausrichtung am Ende jeweils eines ein Sende- und ein Empfangskabel umhüllenden biegsamen Schlauches (7) oder Rohres befestigt sind.

3. Vorrichtung (1) nach Anspruch 1 oder 2, **gekennzeichnet dadurch, dass** als Ausgabemittel von in-real-time ermittelten Bewertungsergebnissen ein Farbdisplay (8) und/oder eine im hörbaren Bereich vornehmbare Sprach- oder Geräuschausgabe über einen Kopfhörer (9) oder über einen im Gehäuse (6) integrierten Lautsprecher (10) vorhanden sind.

4. Vorrichtung (1) nach einem der vorhergehenden Ansprüche, **gekennzeichnet dadurch, dass** die Vorrichtung (1) ein mit einer autarken Spannungsversorgung betriebenes mobiles Handgerät ist.

5. Verfahren zur Dichtheitsprüfung von Fugen (2), **gekennzeichnet dadurch, dass** von einer Sendekapsel (4) ausgehende Ultraschallimpulse oder Ultraschallimpulspakete auf eine Fuge (2) zwischen einem Fensterrahmen (3) und Mauerwerk (13) oder zwischen einer Türzarge und Mauerwerk (13) eines offenen Fensters oder einer offenen Tür gerichtet werden und sowohl die Schalllaufzeit ihres Durchtritts durch Fehlstellen in einer Fugendichtung (11) als auch die der freien Überwindung des offenen Fensters oder einer offenen Tür von einer der Sendekapsel (4) auf gleicher oder in unterschiedlicher Höhe gegenüberliegenden Empfangskapsel (5) erfasst wird, wobei die empfangenen Ultraschallimpulse oder die Ultraschallimpulspakete anschließend einer im Gehäuse (6) integrierten Auswerteeinheit zugeführt werden, die über in einem definierten Abstand zueinander festgelegten Zeittoren I, II (14, 15) den empfangenen Ultraschall qualitativ und quantitativ zu bewerten in der Lage ist und die Ausgabe der bewerteten Messergebnisse optisch und/oder akustisch durchgeführt wird.

6. Verfahren zur Dichtheitsprüfung von Fugen nach Anspruch 5, **gekennzeichnet dadurch, dass** zur Bewertung empfangenen, gepulsten Ultraschalls oder Ultraschallimpulspaketen die Auswerteeinheit mit zumindest zwei zeitlich zueinander versetzten Zeittoren I, II (14, 15) arbeitet, die entweder bei fest zueinander beabstandeter Sende- und Empfangskapsel (4, 5) unveränderbar in ihrer Dimension eingestellt oder bei variabel zueinander positionierbarer Sende- und Empfangskapsel (4, 5) im Wege einer Selbstkalibrierung dimensioniert und lagebestimmt werden.

7. Verfahren zur Dichtheitsprüfung nach den Ansprüchen 5 oder 6, **gekennzeichnet dadurch, dass** über die Messung der Amplitude empfangenen, gepulsten Ultraschalls oder Ultraschallimpulspaketen in einem ersten Zeittor I (14) eine Aussage zur Qualität der Dichtung einer Fuge (2) zwischen einem Fensterrahmen (3) an einem offenen Fenster und Mauerwerk oder an einer Türzarge einer offenen Tür und Mauerwerk (13) an einem Gebäude getroffen wird.

8. Verfahren zur Dichtheitsprüfung nach Anspruch 6, **gekennzeichnet dadurch, dass** mit einem zweiten Zeittor II (15) eine permanente Funktionskontrolle der Messung vorgenommen wird.

9. Verfahren zur Dichtheitsprüfung nach einem der vorhergehenden Ansprüche 5 bis 8, **gekennzeichnet**

**dadurch, dass** die Sende- und Empfangsleistung von Sende- und Empfangskapsel (4, 5) sowohl fest als auch variabel eingestellt und ihre Richtcharakteristik durch ein Richtrohr verstärkt wird.

10. Verfahren zur Dichtheitsprüfung nach einem der vorhergehenden Ansprüche 5 bis 9, **gekennzeichnet dadurch, dass** bei optischer Darstellung der Messergebnisse mehrere farblich abgestufte Leuchtdioden (12) oder ein in einem Farbdisplay (8) sich kontinuierlich aufbauender oder abschwächender Graph verwendet werden.

Figur 1

Figur 2

Figur 3

# Figur 4

# Figur 5

Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202011001757 U1
- DE 4208294 C2

- DE 19500822 C1